Europäisches Patentamt

(19) European Patent Office

Office européen des brevets

(11) Numéro de publication: **0133135**
**B1**

(12) **FASCICULE DE BREVET EUROPEEN**

(45) Date de publication du fascicule du brevet:
**24.06.87**

(51) Int. Cl.⁴: **G 01 N 29/04**

(21) Numéro de dépôt: **84401587.5**

(22) Date de dépôt: **27.07.84**

(54) **Sonde ultrasonore multitransducteurs, à transducteurs de tailles différentes.**

(30) Priorité: **01.08.83 FR 8312641**

(43) Date de publication de la demande:
**13.02.85 Bulletin 85/7**

(45) Mention de la délivrance du brevet:
**24.06.87 Bulletin 87/26**

(84) Etats contractants désignés:
**BE DE GB NL**

(56) Documents cités:
**FR - A - 2 051 645**
**FR - A - 2 243 435**
**FR - A - 2 298 921**
**FR - A - 2 453 437**
**US - A - 4 329 876**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Saglio, Robert, 9, rue des Marchais, F-92160 Antony (FR)**

(74) Mandataire: **Mongrédien, André et al, c/o BREVATOME 25, rue de Ponthieu, F-75008 Paris (FR)**

ACTORUM AG

## Description

La présente invention concerne une sonde ultrasonore multitransducteurs, à transducteurs de
tailles différentes. Elle s'applique notamment au
contrôle non destructif de pièces mécaniques.

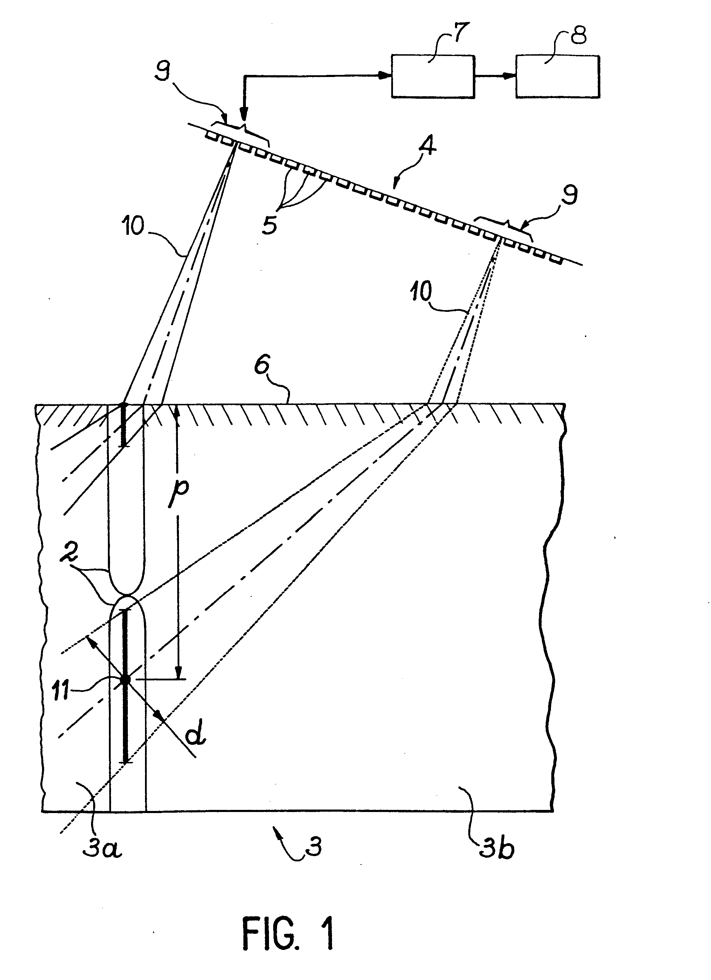

On connaît de nombreuses sondes ultrasonores
multitransducteurs. Elles sont toutes constituées
de transducteurs géométriquement identiques, de
même taille. A titre d'exemple, on a représenté
schématiquement sur la fig. 1, une telle sonde
connue dans l'état de la technique. Elle est par
exemple destinée à contrôler une soudure 2 au
moyen de laquelle deux pièces 3a et 3b sont
assemblées l'une à l'autre, de manière à constituer une pièce unique 3. La sonde représentée sur
la fig. 1 comprend une barrette rectiligne 4 de M
transducteurs ultrasonores émetteurs-récepteurs
5 juxtaposés, tournés vers la pièce 3 à contrôler.
La barrette 4 est inclinée par rapport à la surface 6
de la pièce 3, la soudure 2 étant perpendiculaire à
cette surface 6. La barrette 4 est reliée électriquement à des moyens 7 destinés à activer un groupe
9 de m transducteurs juxtaposés de la barrette 4,
en les faisant fonctionner en tant qu'émetteurs
puis en tant que récepteurs d'ultrasons, et à décaler ledit groupe d'un nombre entier de transducteurs, ce nombre étant par exemple égal à 1, de
manière à balayer toute la barrette 4 et à explorer
ainsi la pièce 3 en profondeur et donc la soudure 2
sur toute sa hauteur. Les moyens 7 permettant
d'activer et de décaler ledit groupe sont reliés
électriquement à des moyens 8 de visualisation de
la pièce 3 en volume.

Les transducteurs 5 ont tous la même taille,
c'est-à-dire la même largeur de zone réceptriceémettrice (comptée dans le sens de la longueur de
la barrette). Le groupe de m transducteurs est
équivalent à un transducteur unique dont la taille
est égale à m fois la taille des transducteurs qui
composent le groupe. L'activation des transducteurs 5 de la barrette 4 est effectuée à partir des
transducteurs les plus éloignés de la surface 6 de
la pièce 3 jusqu'au transducteur le plus proche de
cette surface.

Sur la fig. 1, on constate que la largeur d du
faisceau acoustique 10 émis par le groupe 9 de m
transducteurs s'accroît avec la profondeur p.
Comme le groupe 9 de m transducteurs est décalé, après chaque activation, d'un pas constant,
le taux de redondance, correspondant au nombre
de fois qu'un défaut ponctuel 11 (de la soudure 2
dans le cas présent) est atteint par le faisceau
acoustique 10, s'accroît avec la profondeur p. De
ce fait, la sonde de la fig. 1 présente l'inconvénient
de ne permettre le contrôle de la pièce 3 qu'à
vitesse réduite.

On pourrait imaginer d'autres sondes multitransducteurs, permettant de conserver un taux
de redondance constant, c'est-à-dire indépendant
de la profondeur, de manière à obtenir une vitesse
de contrôle plus importante, en augmentant simultanément, lorsque la profondeur p augmente,
le nombre m d'éléments du groupe 9 et le pas
d'avance ou de décalage dudit groupe. Ces autres
sondes multitransducteurs présenteraient de ce fait l'inconvénient de nécessiter des moyens électroniques de commande très complexes.

La présente invention a pour but de remédier
aux inconvénients précédents.

Elle a pour objet une sonde ultrasonore destinée à émettre des faisceaux ultrasonores en direction de points de profondeur variable d'un objet à
contrôler, et/ou à recevoir des faisceaux ultranores de ces points en réponse à d'autres faisceaux ultrasonores envoyés sur ceux-ci, du type
comprenant:

– au moins une ligne droite de M transducteurs
ultrasonores émetteurs et/ou récepteurs juxtaposés, orientés vers l'objet à contrôler, et

– des moyens d'activation d'au moins un
groupe de m transducteurs juxtaposés, pris parmi
les M transducteurs, et de décalage, suivant une
direction donnée, de chaque groupe de m transducteurs, d'un nombre entier de transducteurs,
après activation, caractérisé en ce que les M transducteurs ont des tailles différentes les unes des
autres et sont ordonnés, dans leur ligne, de façon
monotone suivant leurs tailles, celles-ci étant déterminées de manière à explorer l'objet avec un
taux de redondance connu, et sensiblement indépendant de la profondeur.

Par «sonde ultrasonore destinée à émettre et/ou
à recevoir des faisceaux ultrasonores», on entend
une sonde ayant au moins l'une des deux fonctions d'émission et de réception de faisceaux ultrasonores.

Par «transducteur ultrasonore émetteur et/ou
récepteur», on entend un transducteur ayant au
moins l'une des deux fonctions d'émission et de
réception d'ultrasons.

Par «taille d'un transducteur ultrasonore émetteur et/ou récepteur», on entend la dimension de
la zone émettrice et/ou réceptrice de ce transducteur, comptée suivant la longueur de la ligne à
laquelle appartient ce transducteur.

Par «transducteurs ordonnés de façon monotone suivant leurs tailles», on entend des transducteurs qui sont rangés par tailles croissantes ou
décroissantes.

La divergence d'un faisceau ultrasonore étant
inversement proportionnelle à la taille du transducteur qui l'émet, on comprend que la variation
de la taille des transducteurs le long de leur ligne
permette de compenser l'accroissement de la largeur du faisceau ultrasonore avec la profondeur.

L'utilisation de transducteurs ultrasonores de
tailles variables, déterminées de façon à permettre le contrôle d'un objet avec un taux de redondance constant, indépendamment de la profondeur, permet d'obtenir une vitesse de contrôle
optimale, bien supérieure aux vitesses de contrôle
que l'on peut obtenir avec les sondes multitransducteurs connues, tout en conservant des moyens
électroniques de commande simples et donc peu
coûteux. En outre, à qualité d'examen constante,
c'est-à-dire à taux de redondance constant, la
sonde de l'invention nécessite bien moins de
transducteurs et donc de mesures à faire, que les
sondes connues, ce qui augmente d'autant la vitesse d'analyse. De plus, la sonde de l'invention a un meilleur rapport signal sur bruit que les sondes connues dans lesquelles les transducteurs ont tous la même taille (ce rapport correspondant dans le cas de l'émission, au rapport de l'énergie propagée par le lobe primaire d'émission à l'énergie propagée par les lobes secondaires d'émission).

Selon un mode de réalisation particulier de la sonde ultrasonore objet de l'invention, les M transducteurs sont des transducteurs émetteurs-récepteurs, l'activation des m transducteurs consiste en une émission suivie d'une réception et les moyens d'activation et de décalage sont prévus pour effectuer ladite activation à partir des transducteurs de plus petite taille dans la ligne, et pour effectuer chaque décalage vers les transducteurs de plus grande taille dans la ligne, la sonde permettant ainsi le contrôle de l'objet suivant la méthode par écho, encore appelée «méthode émetteur-récepteur».

Selon un autre mode de réalisation particulier, les M transducteurs sont des transducteurs émetteurs-récepteurs et les moyens d'activation et de décalage sont prévus pour effectuer l'activation d'un groupe de m transducteurs à partir des transducteurs de plus petite taille dans la ligne en faisant fonctionner ces m transducteurs en tant qu'émetteurs, suivie de l'activation d'un autre groupe de m autres transducteurs à partir des transducteurs de plus grande taille dans la ligne en faisant fonctionner ces m autres transducteurs en tant que récepteurs, et pour effectuer le décalage dudit groupe vers les transducteurs de plus grande taille dans la ligne et le décalage dudit autre groupe vers les transducteurs de plus petite taille dans la ligne, la sonde permettant ainsi le contrôle de l'objet suivant la méthode tandem.

Selon un autre mode de réalisation particulier, le nombre de lignes de M transducteurs est égal à deux, l'une des lignes étant composée de transducteurs émetteurs et l'autre de transducteurs récepteurs, ces lignes étant en outre parallèles, situées en regard l'une de l'autre de part et d'autre de l'objet et orientées l'une par rapport à l'autre, de manière que le transducteur de plus grande taille de l'une soit en regard du transducteur de plus petite taille de l'autre, et les moyens d'activation et de décalage sont prévus pour effectuer l'activation d'un groupe de m transducteurs émetteurs à partir des transducteurs de plus petite taille dans la ligne correspondante, suivie de l'activation d'un autre groupe de m transducteurs récepteurs à partir des transducteurs de plus grande taille dans l'autre ligne, et pour effectuer le décalage dudit groupe vers les transducteurs de plus grande taille dans la ligne correspondante et le décalage de l'autre groupe vers les transducteurs de plus petite taille dans l'autre ligne, la sonde permettant ainsi le contrôle de l'objet suivant la méthode par transmission.

Selon un autre mode de réalisation particulier, le nombre de lignes de M transducteurs est égal à deux, l'une des lignes étant composée de transducteurs émetteurs et l'autre de transducteurs récepteurs, ces lignes étant en outre inclinées l'une par rapport à l'autre, situées d'un même côté de l'objet et disposées de manière à avoir leurs transducteurs respectifs de plus petite taille en regard l'un de l'autre et à diverger à partir de ces transducteurs de plus petite taille et les moyens d'activation et de décalage sont prévus pour effectuer l'activation d'un groupe de m transducteurs émetteurs à partir des transducteurs de plus petite taille dans la ligne correspondante, suivie de l'activation d'un autre groupe de m transducteurs récepteurs à partir des transducteurs de plus petite taille dans l'autre ligne, et pour effectuer le décalage desdits groupe et autre groupe vers les transducteurs de plus grande taille dans leurs lignes respectives, la sonde permettant ainsi le contrôle de l'objet suivant la méthode par réflexion, encore appelée «méthode émetteur-récepteur séparés».

Selon un premier type de ces différents modes de réalisation particuliers, les moyens d'activation et de décalage sont prévus par activer simultanément les transducteurs de chaque groupe de m transducteurs.

Selon un deuxième type de ces modes de réalisation particuliers, les moyens d'activation et de décalage sont prévus pour activer les transducteurs de chaque groupe de m transducteurs progressivement et de proche en proche à partir de l'un d'entre eux, avec des retards d'activation indépendants de la position dudit groupe dans sa ligne.

Selon une caractéristique préférée de la sonde ultrasonore objet de l'invention, les tailles des M transducteurs de chaque ligne forment une progression arithmétique.

Enfin, selon un autre mode de réalisation particulier de l'invention, le nombre entier de transducteurs dont est décalé chaque groupe de m transducteurs, est supérieur au nombre m et les moyens d'activation et de décalage sont prévus pour faire varier le nombre m à chaque activation, de manière que le faisceau ultrasonore émis par ledit groupe et/ou reçu par ce groupe, ait une taille indépendante de la profondeur.

Avec ce dernier mode de réalisation particulier, les moyens électroniques de commande des transducteurs sont un peu plus compliqués que ceux qui sont utilisés avec une sonde selon l'invention fonctionnant avec un nombre m de transducteurs actifs constant, mais restent néanmoins plus simples que les moyens électroniques de commande des sondes connues dans l'état de la technique qui, pour conserver un taux de redondance constant, nécessitent non seulement un nombre m de transducteurs variable avec la profondeur, mais encore un décalage variable du groupe de m transducteurs avec cette profondeur.

La présente invention sera mieux compris à la lecture de la description qui suit, d'exemples de réalisation donnés à titre indicatif et non limitatif, en référence aux dessins annexés qui font suite à la fig. 1 déjà décrite, représentant schématiquement une sonde ultrasonore multitransducteurs connue, et sur lesquels:

– la fig. 2 est une vue schématique d'un mode de réalistion particulier de la sonde ultrasonore objet de l'invention, permettant le contrôle d'une pièce par la méthode dite «par écho»;

– la fig. 3 est un schéma explicatif de la possibilité d'utiliser des transducteurs focalisés dans la présente invention, et

– les fig. 4 à 6 sont des vues schématiques d'autres modes de réalisation particuliers de la sonde ultrasonore objet de l'invention, permettant respectivement de contrôler une pièce par les méthodes dites «tandem», «par transmission» et «par réflexion».

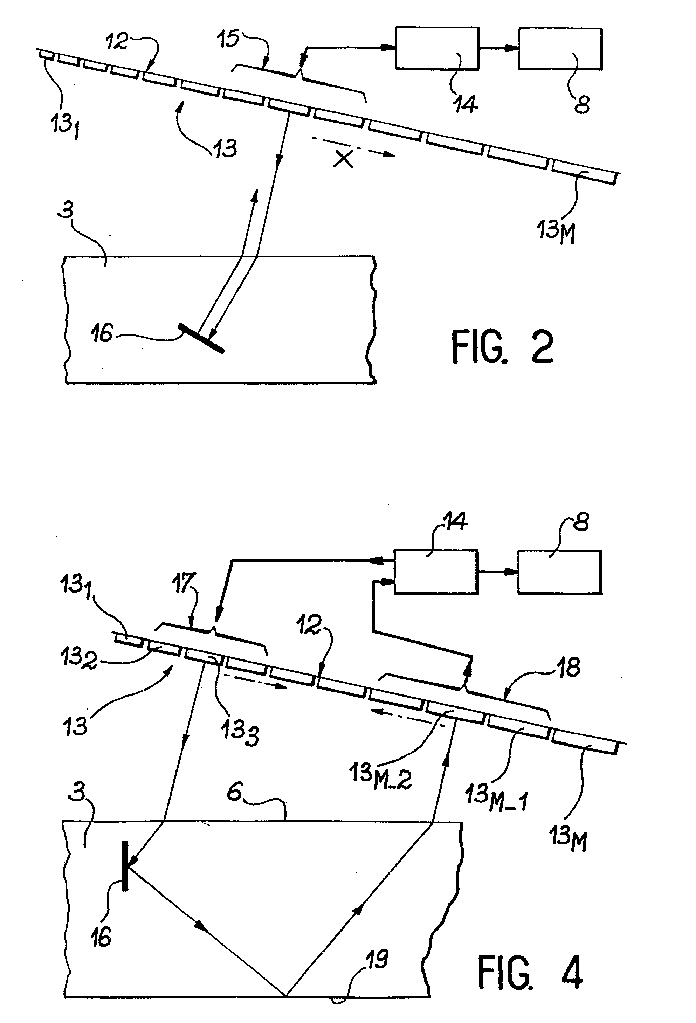

Sur la fig. 2, on a représenté schématiquement un mode de réalisation particulier de la sonde ultrasonore objet de l'invention, permettant de contrôler une pièce 3 par la méthode dite «par écho». Cette sonde comprend une ligne ou barrette linéaire 12 de M transducteurs ultrasonores émetteurs-récepteurs 13, et des moyens électroniques 14 de commande de la barrette 12, ces moyens étant reliés à des moyens 8 de visualisation en volume de la pièce 3.

Les transducteurs 13 ont des tailles qui sont différentes les unes des autres et forment une progression arithmétique. Les transducteurs 13 sont rangés par tailles croissantes sur la barrette 12 et celle-ci est maintenue inclinée par rapport à la pièce 3, au moyen d'un support non représenté et de manière que le premier transducteur $13_1$ de plus petite taille soit le plus éloigné de la pièce 3.

Les moyens 14 de commande de la barrette 12 sont prévus pour activer un groupe 15 de m transducteurs juxtaposés, pris parmi les M transducteurs, à partir des transducteurs de plus petite taille de la barrette 12, et pour effectuer, après chaque activation, un décalage du groupe 15, d'un nombre entier de transducteurs, par exemple d'un transducteur, en direction des transducteurs de plus grande taille, jusqu'à ce que tous les transducteurs de la barrette aient ainsi été activés. En d'autres termes, avec m égal à 3 par exemple, un premier groupe de transducteurs constitué par le premier le second et le troisième transducteurs de la barrette 12 est activé: ces trois transducteurs sont rendus émetteurs de manière à envoyer un faisceau ultrasonore dans la pièce 3, puis récepteurs, de manière à recevoir un écho éventuel provenant d'un défaut 16 de la pièce 3. Après quoi, un deuxième groupe de transducteurs, constitué par le second, le troisième et le quatrième transducteurs de la barrette 12 est activé, et ainsi de suite.

On peut montrer que les transducteurs dont les tailles forment une progression arithmétique, permettent de contrôler la pièce 3 avec un taux de redondance indépendant de la profondeur. En effet, le diamètre d du faisceau ultrasonore (pour une chute à 6dB) est lié à la profondeur p d'un point examiné par la relation suivante:

$$d = \lambda(K_1 + K_2 p)/D \qquad (1)$$

dans laquelle $\lambda$, $K_1$, $K_2$ et D désignent respectivement la longueur d'onde du faisceau ultrasonore, une constante, une autre constante, et la dimension dans le plan d'incidence, du transducteur équivalent au groupe de m transducteurs. En considérant un décalage $\Delta x$ dudit groupe, d'un transducteur, on peut écrire, en première approximation:

$$\Delta x = D/m \qquad (2)$$

Une progression de $\Delta x$ suivant l'axe X défini par la barrette 12, conduit à une progression en profondeur $\Delta p$, telle que:

$$\Delta p = K_3 \Delta x \qquad (3)$$

où $K_3$ est une constante. La condition du taux de recouvrement constant implique:

$$\Delta p = K_4 d \qquad (4)$$

où $K_4$ est une constante. Les relations (1) à (4) précédentes permettent d'écrire:

$$D^2 = K_4 m\lambda(K_1 + K_2 p)/K_3 \qquad (5)$$

Une différenciation de la relation (5) précédente permet d'obtenir la variation $\Delta D$ de la dimension D du transducteur équivalent au groupe de m transducteurs:

$$\Delta D = K_2 K_4/\lambda \qquad (6)$$

Cette variation $\Delta D$ est égale à la différence entre la taille $\Delta x_{n+m}$ du transducteur de rang n+m dans la barrette 12 et la taille $\Delta x_n$ du transducteur de rang n dans cette barrette. Il résulte de ce qui précède que la taille du transducteur de rang n dans la barrette peut s'écrire:

$$\Delta x_n = a_1 + n a_2 \qquad (7)$$

où $a_1$ et $a_2$ sont des constantes. Cette dernière formule (7) peut également s'écrire:

$$\Delta x_n = \Delta x_1 + (n-1 a_2 \qquad (8)$$

ce qui montre bien que des transducteurs dont les tailles forment une progression arithmétique permettent d'obtenir un taux de redondance constant, c'est-à-dire indépendant de la profondeur. La taille des transducteurs augmente au fur et à mesure que la profondeur augmente, mais de ce fait, la dimension du faisceau ultrasonore augmente moins vite avec la profondeur que la dimension du faisceau ultrasonore produit par la sonde connue dans l'état de la technique, décrite en référence à la fig. 1.

Les constantes $a_1$ et $a_2$ de la formule (7) ci-dessus sont déterminables en fonction de la forme de la pièce 3 et de la position de la barrette 12 par rapport à cette pièce.

La barrette 12 comportant des transducteurs de tailles différentes, peut être réalisée au moyen d'une barrette en céramique dans laquelle on effectue, au moyen d'une scie diamantée ou d'une scie à fil, des coupures à des intervalles déterminés, de manière à constituer les transducteurs et à les isoler électriquement et mécaniquement les uns des autres.

A titre d'exemple, pour une fréquence de 1 MHz, pour couvrir une profondeur de 250 mm, avec un même nombre n égal à 6 transducteurs par groupe, et pour une même dimension (7,5 mm) de faisceau ultrasonore à profondeur nulle, il faut, avec la sonde classique représentée sur la fig. 1, une barrette de 54 transducteurs de 5 mm de longueur et 48 pas de contrôle, le diamètre du faisceau ultrasonore étant de 54 mm à 250 mm de profondeur, tandis qu'avec la sonde selon l'invention, représentée sur la fig. 2, il suffit d'une barrette de 32 éléments dont la longueur va de 5 à 13,4 mm, et de 26 pas de contrôle, le diamètre du faisceau à 250 mm de profondeur étant de 20 mm.

On voit donc, avec cet exemple, l'avantage très important de l'invention par rapport à l'art antérieur.

La sonde décrite en référence à la fig. 2 peut fonctionner en sonde non focalisée, les moyens de commande 14 étant alors prévus pour activer simultanément les transducteurs 13 du groupe 15, lors de chaque activation.

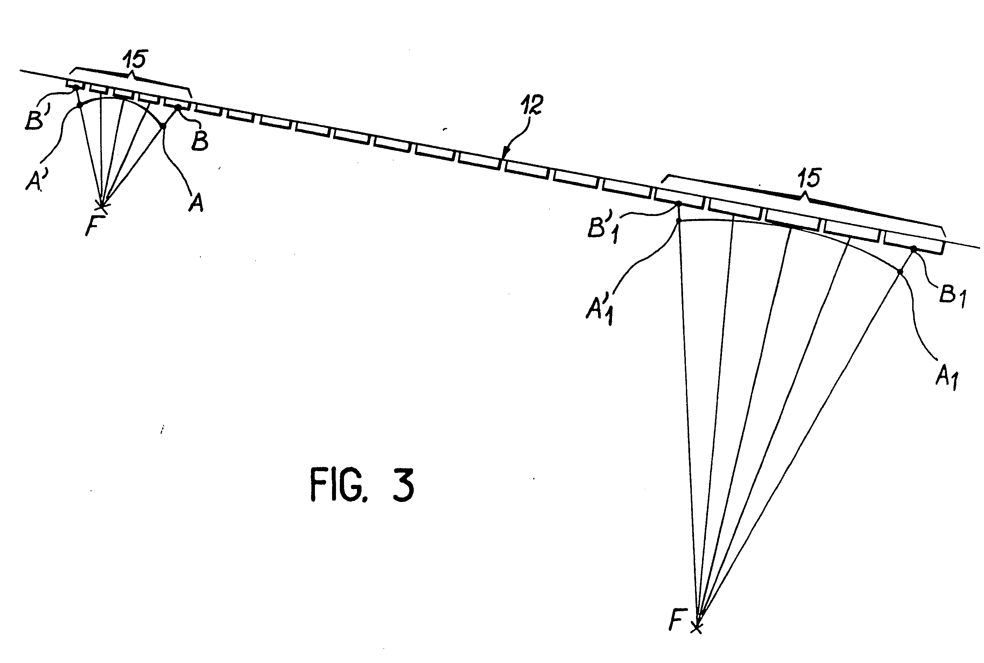

Sur la fig. 3, on a envisagé le cas où le transducteur équivalent au groupe 15 de m transducteurs est focalisé. Les moyens de commande 14 sont alors prévus pour activer les transducteurs du groupe 15 progressivement et de proche en proche à partir de l'un d'entre eux. Par exemple, pour une position donnée du groupe 15 avec un nombre m de transducteurs impair, égal à 5 par exemple, on introduit entre les signaux correspondant au transducteur central du groupe 15 et les signaux des autres transducteurs de ce groupe, des retards croissant au fur et à mesure qu'on s'éloigne du transducteur central, ces retards étant en outre symétriques par rapport à ce transducteur. Sur la fig. 3, on a représenté les retards maximaux par des segments A, B et A', B' égaux pour une position donnée du groupe 15 et par des segments $A_1$, $B_1$ et $A'_1$, $B'_1$ égaux pour une autre position de ce groupe 15. On peut montrer que dans le cas considéré de transducteurs dont les tailles augmentent suivant une progression arithmétique, le retard maximal $\Delta$ correspondant aux transducteurs les plus éloignés du transducteur central du groupe 15 est indépendant de la profondeur. Par conséquent, en maintenant le retard $\Delta$ constant, quelle que soit la position du groupe 15 dans la barrette 12 de transducteurs, la profondeur du point F de focalisation augmente avec la taille des transducteurs activés, c'est-à-dire au fur et à mesure que le groupe 15 est décalé vers les transducteurs de plus grande taille. (Sur la fig. 3, on a fait abstraction de la réfraction qui n'introduit qu'un facteur multiplicatif dans les calculs.)

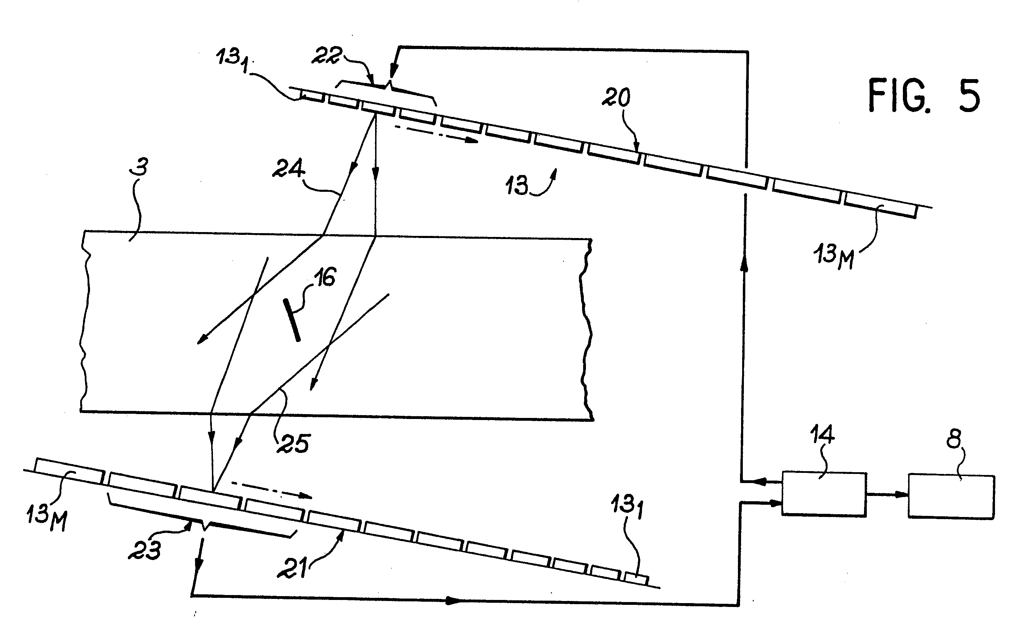

Sur la fig. 4, on a représenté schématiquement un autre mode de réalisation particulier de la sonde ultrasonore objet de l'invention, permettant de contrôler une pièce 3 par la méthode «tandem». La sonde représentée sur la fig. 4 est constituée de la même façon que la sonde décrite en référence à la fig. 2, excepté en ce qui concerne ses moyens 14 de commande qui sont prévus pour effectuer l'activation d'un groupe 17 de m transducteurs à partir des transducteurs de plus petite taille de la barrette 12, en faisant fonctionner ces m transducteurs en tant qu'émetteurs, suivie de l'activation d'un autre groupe 18 de m autres transducteurs à partir des transducteurs de plus grande taille de la barrette 12 en faisant fonctionner ces m autres transducteurs en tant que récepteurs, et pour effectuer le décalage dudit groupe 17 vers les transducteurs de plus grande taille de la barrette et le décalage dudit autre groupe 18 vers les transducteurs de plus petite taille de la barrette. En d'autres termes, pour un nombre m par exemple égal à 3, les moyens de commande activent d'abord les trois premiers transducteurs $13_1$, $13_2$, $13_3$ de la barrette en tant qu'émetteurs et les trois derniers transducteurs $13_{M-2}$, $13_{M-1}$, $13_M$ de cette barrette en tant que récepteurs. Ensuite, avec un décalage d'un transducteur par exemple, les transducteurs de rang 2, 3 et 4 sont activés en tant qu'émetteurs et les transducteurs de rang N–3, N–2 et N–1 en tant que récepteurs, et ainsi de suite jusqu'à l'activation des trois derniers transducteurs de la barrette en tant qu'émetteurs et des trois premiers transducteurs de la barrette en tant que récepteurs. Pour une position donnée du groupe 17 de transducteurs, il y a émission d'un faisceau ultrasonore qui se propage dans la pièce 3, se réfléchit sur un défaut éventuel 16 de cette pièce, perpendiculaire à la surface 6 de celle-ci, se réfléchit ensuite sur le fond 19 de la pièce 3, puis est capté par l'autre groupe 18 de transducteurs, ce qui permet de détecter le défaut 16.

Sur la fig. 5, on a représenté schématiquement un autre mode de réalisation de la sonde ultrasonore objet de l'invention, permettant de contrôler la pièce 3 suivant la méthode dite «par transmission». La sonde ultrasonore représentée sur la fig. 5 comprend une ligne ou barrette linéaire 20 et un autre ligne ou barrette linéaire 21 de transducteurs ultrasonores 13, ces deux barrettes étant identiques à la barrette 12 décrite en référence à la fig. 2, excepté que dans le cas présent, les transducteurs de la barrette 20 sont destinés à fonctionner en tant qu'émetteurs d'ultrasons et les transducteurs de l'autre barrette 21 sont destinés à fonctionner en tant que récepteurs d'ultrasons. La barrette 20 est disposée d'un côté de la pièce 3, ses transducteurs étant tournés vers celle-ci, et montés en position inclinée par rapport à cette pièce 3, sur un support non représenté, de manière que le transducteur de plus petite taille de la barrette 20 soit le transducteur le plus éloigné de la pièce 3. L'autre barrette 21 est disposée de l'autre côté de la pièce 3, ses transducteurs étant tournés vers celle-ci. Cette autre barrette 21 est montée sur un autre support non représenté, parallèlement à la barrette 20 et de façon que le transducteur de plus grande taille de la barrette 21 se trouve en regard du transducteur de plus petite taille de la barrette 20.

La sonde représentée sur la fig. 5, comprend également des moyens 14 de commande prévus pour effectuer l'activation d'un groupe 22 de m transducteurs émetteurs de la barrette 20 à partir des transducteurs de plus petite taille de celle-ci, suivie de l'activation d'un autre groupe 23 de m transducteurs récepteurs de l'autre barrette 21, à partir de transducteurs de plus grande taille de cette autre barrette, et pour effectuer le décalage du groupe 22 vers les transducteurs de plus grande taille de la barrette 20 et le décalage de l'autre groupe 23 vers les transducteurs de plus petite taille de l'autre barrette 21. En d'autres termes, le nombre m étant par exemple égal à 3, le groupe 22 constitué par les trois premiers transducteurs, de plus petite taille, de la barrette 20 et le groupe 23 constitué par les trois transducteurs de plus grande taille de l'autre barrette 21 sont d'abord activés, puis chaque groupe est décalé d'un même nombre de transducteurs, d'un transducteur par exemple. Alors, les trois transducteurs suivants, respectivement des barrettes 20 et 21, sont activés, et ainsi de suite. Pour une position donnée du groupe 22 de transducteurs et de l'autre groupe 23 de transducteurs, un faisceau ultrasonore 24 est émis par le groupe 22 et se propage dans la pièce 3 dans laquelle il rencontre éventuellement un défaut 16. Celui-ci est détecté lorsqu'il se trouve dans la zone commune au faisceau 24 émis par le groupe 22 et au diagramme spatial de réception 25 de l'autre groupe 23 de transducteurs récepteurs et peut ainsi être observé sur les moyens 8 de visualisation reliés aux moyens 14 de commande.

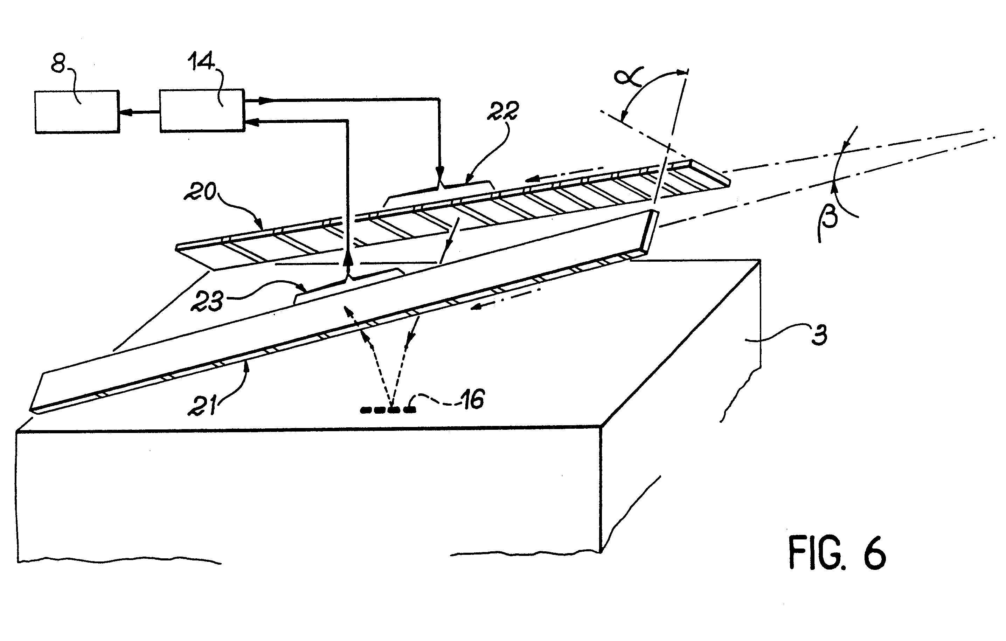

Sur la fig. 6, on a représenté schématiquement un autre mode de réalisation particulier de la sonde ultrasonore objet de l'invention, permettant de contrôler la pièce 3 suivant la méthode dite «par réflexion». La sonde représentée sur la fig. 6 comprend la barrette 20 et l'autre barrette 21 décrites en référence à la fig. 5, mais disposées d'une autre façon. Les transducteurs des barrettes 20 et 21 étant cependant toujours destinés à fonctionner respectivement en tant qu'émetteurs et en tant que récepteurs d'ultrasons.

Les deux barrettes 20 et 21 sont disposées d'un même côté de la pièce 3 et sont montées sur un support non représenté de façon qu'elles soient inclinées par rapport à cette pièce 3, leurs transducteurs de plus petite taille étant les transducteurs les plus éloignés de la pièce 3, que les plans respectifs des barrettes 20 et 21 fassent entre eux un angle obtus α et que les deux barrettes divergent d'un faible angle aigu β à partir de leurs transducteurs de plus petite taille. La sonde ultrasonore représentée sur la fig. 6 comprend également des moyens de commande 14 prévus pour effectuer l'activation d'un groupe 22 de m transducteurs émetteurs à partir des transducteurs de plus petite taille de la barrette 20, suivie de l'activation d'un autre groupe 23 de m transducteurs récepteurs à partir des transducteurs de plus petite taille de l'autre barrette 21, et pour effectuer le décalage du groupe 22 et de l'autre groupe 23 vers les transducteurs de plus grande taille de leurs barrettes respectives.

En d'autres termes, le nombre m étant par exemple égal à 3, les groupes 22 et 23 respectivement constitués par les trois premiers transducteurs de plus petite taille de chaque barrette sont d'abord activés, puis ces groupes sont décalés d'un transducteur par exemple, dans les barrettes correspondantes, et ainsi de suite, jusqu'à l'activation des trois derniers transducteurs de chacune des deux barrettes. Pour une position donnée des groupes 22 et 23 de M transducteurs respectivement émetteurs et récepteurs, un faisceau ultrasonore est émis par le groupe 22 et se propage dans la pièce 3 dans laquelle il rencontre éventuellement un défaut 16 appartenant au plan bissecteur des plans respectifs des deux barrettes 20 et 21, défaut sur lequel le faisceau ultrasonore se réfléchit en direction de l'autre groupe 23 de transducteurs récepteurs, ce qui permet de détecter le défaut. Celui-ci est alors observé grâce à des moyens 8 de visualisation reliés aux moyens de commande 14.

Bien entendu, dans les sondes représentées sur les fig. 4 à 6, les transducteurs respectivement équivalents aux groupes de m transducteurs pourraient être des transducteurs focalisés. De plus, pour les sondes décrites en référence aux fig. 2 à 6, le nombre entier de transducteurs dont est décalé chaque groupe de m transducteurs, pourrait être supérieur au nombre m, les moyens de commande étant alors prévus pour faire varier le nombre m à chaque activation, de manière que le faisceau ultrasonore émis par un groupe de m transducteurs émetteurs conserve une largeur constante quelle que soit la profondeur.

Dans les exemples de description précédents, le nombre m de transducteurs activés est le même à l'émission et à la réception; font également partie de l'invention des exemples où ces nombres sont différents, ce qui permet d'obtenir des diamètres différents de faisceaux, à l'émission et à la réception.

D'autre part, dans tous les exemples décrits, la scrutation de transducteurs se fait, des transducteurs de petite taille vers les transducteurs de grande taille; mais font également partie de l'invention des exemples où le sens de scrutation peut être inverse, ou même variable au cours du temps, l'invention concernant la taille du faisceau et non la manière dont il balaye les pièces à contrôler.

## Revendications

1. Sonde ultrasonore destinée à émettre des faisceaux ultrasonores en direction de points de profondeur variable d'un objet (3) à contrôler, et/ou à recevoir des faisceaux ultrasonores de ces points en réponse à d'autres faisceaux ultrasonores envoyés sur ceux-ci, du type comprenant:
   — au moins une ligne droite de M transducteurs ultrasonores émetteurs (12, 20) et/ou récepteurs (13, 21) juxtaposés, orientés vers l'objet à contrôler, et
   — des moyens (14) d'activation d'au moins un groupe (15, 17–18, 22–23) de m transducteurs juxtaposés, pris parmi les M transducteurs, et de décalage, suivant une direction donnée de chaque groupe de m transducteurs, d'un nombre entier de transducteurs, après activation, caractérisé en ce que les M transducteurs ont des tailles différentes les unes des autres, la taille d'un transducteur étant la dimension de la zone émettrice et/ou réceptrice du transducteur, comptée suivant la longueur de la ligne droite à laquelle appartient ce transducteur, et sont ordonnés, dans leur ligne, de façon monotone suivant leurs tailles, celles-ci étant déterminées de manière à explorer l'objet avec un taux de redondance connu et sensiblement indépendant de la profondeur.

2. Sonde ultrasonore selon la revendication 1, caractérisée en ce que les M transducteurs (13) sont des transducteurs émetteurs-récepteurs, en ce que l'activation des m transducteurs consiste en une émission suivie d'une réception et en ce que les moyens (14) d'activation et de décalage sont prévus pour effectuer ladite activation à partir de transducteurs de plus petite taille dans la ligne (12), et pour effectuer chaque décalage vers les transducteurs de plus grande taille dans la ligne, la sonde permettant ainsi le contrôle de l'objet suivant la méthode par écho.

3. Sonde ultrasonore selon la revendication 1, caractérisée en ce que les M transducteurs (13) sont des transducteurs émetteurs-récepteurs et en ce que les moyens (14) d'activation et de décalage sont prévus pour effectuer l'activation d'un groupe (17) de m transducteurs à partir des transducteurs de plus petite taille dans la ligne (12) en faisant fonctionner ces m transducteurs en tant qu'émetteurs, suivie de l'activation d'un autre groupe (18) de m autres transducteurs à partir des transducteurs de plus grande taille dans la ligne (12) en faisant fonctionner ces m autres transducteurs en tant que récepteurs, et pour effectuer le décalage dudit groupe (17) vers les transducteurs de plus grande taille dans la ligne et le décalage dudit autre groupe (18) vers les transducteurs de plus petite taille dans la ligne, la sonde permettant ainsi le contrôle de l'objet suivant la méthode tandem.

4. Sonde ultrasonore selon la revendication 1, caractérisée en ce que le nombre de lignes de M transducteurs est égal à deux, l'une (20) des lignes étant composée de transducteurs émetteurs et l'autre (21) de transducteurs récepteurs, ces lignes étant en outre parallèles, situées en regard l'une de l'autre de part et d'autre de l'objet (3) et orientées l'une par rapport à l'autre, de manière que le transducteur de plus grande taille de l'une soit en regard du transducteur de plus petite taille de l'autre, et en ce que les moyens (14) d'activation et de décalage sont prévus pour effectuer l'activation d'un groupe (22) de m transducteurs émetteurs à partir des transducteurs de plus petite taille dans la ligne (20) correspondante, suivie de l'activation d'un autre groupe (23) de m transducteurs récepteurs à partir des transducteurs de plus grande taille dans l'autre ligne (21), et pour effectuer le décalage dudit groupe vers les transducteurs de plus grande taille dans la ligne correspondante et le décalage de l'autre groupe vers les transducteurs de plus petite taille dans l'autre ligne, la sonde permettant ainsi le contrôle de l'objet suivant la méthode par transmission.

5. Sonde ultrasonore selon la revendication 1, caractérisé en ce que le nombre de lignes de M transducteurs est égal à deux, l'une (20) des lignes étant composée de transducteurs émetteurs et l'autre (21) de transducteurs récepteurs, ces lignes étant en outre inclinées l'une par rapport à l'autre, situées d'un même côté de l'objet (3) et disposées de manière à avoir leurs transducteurs respectifs de plus petite taille en regard l'un de l'autre et à diverger à partir de ces transducteurs de plus petite taille et en ce que les moyens (14) d'activation et de décalage sont prévus pour effectuer l'activation d'un groupe (22) de m transducteurs émetteurs à partir des transducteurs de plus petite taille dans la ligne (20) correspondante, suivie de l'activation d'un autre groupe (23) de m transducteurs récepteurs à partir des transducteurs de plus petite taille dans l'autre ligne (21), et pour effectuer le décalage desdits groupe et autre groupe vers les transducteurs de plus grande taille dans leurs lignes respectives, la sonde permettant ainsi le contrôle de l'objet suivant la méthode par réflexion.

6. Sonde ultrasonore selon l'une quelconque des revendications 1 à 5, caractérisée en ce que les moyens (14) d'activation et de décalage sont prévus pour activer simultanément les transducteurs de chaque groupe de m transducteurs.

7. Sonde ultrasonore selon l'une quelconque des revendications 1 à 5, caractérisée en ce que les moyens (14) d'activation et de décalage sont prévus pour activer les transducteurs de chaque groupe de m transducteurs progressivement et de proche en proche à partir de l'un d'entre eux, avec des retards d'activation indépendants de la position dudit groupe dans sa ligne.

8. Sonde ultrasonore selon l'une quelconque des revendications 1 à 7, caractérisée en ce que les tailles des M transducteurs de chaque ligne forment une progression arithmétique.

9. Sonde ultrasonore selon l'une quelconque des revendications 1 à 8, caractérisée en ce que le nombre entier de transducteurs dont est décalé chaque groupe de m transducteurs, est supérieur au nombre m et en ce que les moyens (14) d'activation et de décalage sont prévus pour faire varier le nombre m à chaque activation, de manière que le faisceau ultrasonore émis par ledit groupe et/ou reçu par ce groupe, ait une taille indépendante de la profondeur.

**Patentansprüche**

1. Ultraschallsonde zum Aussenden von Ultraschallbündeln in Richtung zu Punkten wechselnder Tiefe eines zu prüfenden Gegenstandes (3) und/oder zum Empfangen von Ultraschallbündeln von diesen Punkten im Ansprechen auf andere auf diese ausgesandte Ultraschallbündel, mit:
– wenigstens einer geraden Linie von M nebeneinander angeordneten Ultraschallwandlersendern (12, 20) und/oder Empfängern (13, 21), die zu dem zu prüfenden Gegenstand hin ausgerichtet sind, und

– Mitteln (14) zum Aktivieren wenigstens einer Gruppe (15, 17–18, 22–23) von m nebeneinander angeordneten Wandlern von den M Wandlern und zum Versetzen einer ganzen Zahl von Wandlern nach der Aktivierung in einer gegebenen Richtung für jede Gruppe von m Wandlern, dadurch gekennzeichnet, dass die M Wandler jeweils eine unterschiedliche Grösse aufweisen, wobei die Grösse eines Wandlers die längs der geraden Linie, zu der dieser Wandler gehört, gemessene Abmessung des Sendebereichs und/oder Empfangsbereichs des Wandlers ist, und auf ihrer Linie ihrer Grössen entsprechend monoton geordnet sind, wobei diese derart bestimmt sind, dass der Gegenstand mit einem bekannten und im wesentlichen von der Tiefe unabhängigen Redundanzmass untersucht wird.

2. Ultraschallsonde nach Anspruch 1, dadurch gekennzeichnet, dass die M Wandler (13) Sende-Empfängerwandler sind, dass die Aktivierung der m Wandler im Aussenden mit einem nachfolgenden Empfangen besteht, und dass die Mittel (14) zum Aktivieren und zum Versetzen vorgesehen sind, um die Aktivierung ausgehend von den Wandlern kleinerer Grösse in der Linie (12) und das Versetzen in Richtung zu den Wandlern grösserer Grösse in der Linie durchzuführen, wobei die Sonde somit die Prüfung des Gegenstands gemäss dem Echoverfahren ermöglicht.

3. Ultraschallsonde nach Anspruch 1, dadurch gekennzeichnet, dass die M Wandler (13) Sende- und Empfängerwandler sind und dass die Mittel (14) zum Aktivieren und zum Versetzen vorgesehen sind, um die Aktivierung einer Gruppe (17) von m Wandlern ausgehend von den Wandlern kleinerer Grösse in der Reihe (12) durchzuführen, indem diese m Wandler als Sender mit nachfolgender Aktivierung einer anderen Gruppe (18) von m anderen Wandlern ausgehend von Wandlern grösserer Abmessung in der Reihe (12) betrieben werden, wobei diese m anderen Wandler als Empfänger betrieben werden, und um die Versetzung der genannten Gruppe (17) in Richtung zu den Wandlern mit grösserer Grösse in der Reihe und Versetzung der genannten anderen Gruppe (18) in Richtung zu den Wandlern geringerer Grösse in der Reihe durchzuführen, wodurch die Sonde somit die Prüfung des Gegenstandes gemäss dem Tandemverfahren ermöglicht.

4. Ultraschallsonde nach Anspruch 1, dadurch gekennzeichnet, dass die Anzahl der Linien von M Wandlern gleich zwei ist, dass eine (20) der Linien aus Senderwandlern und die andere (21) aus Empfängerwandlern zusammengesetzt ist, wobei diese Linien ferner parallel verlaufen und sich gegenüberliegend jeweils auf einer Seite des Gegenstands (3) befinden und in bezug aufeinander derart ausgerichtet sind, dass der Wandler mit grösster Grösse der einen Linie dem Wandler mit geringster Grösse der anderen gegenüber liegt, und dass die Mittel (14) zum Aktivieren und zum Versetzen vorgesehen sind, um die Aktivierung einer Gruppe (22) von m Senderwandlern ausgehend von Wandlern kleinerer Grösse in der entsprechenden Linie (20) mit nachfolgender Aktivierung einer anderen Gruppe (23) von m Empfängerwandlern ausgehend von Wandlern grösserer Grösse in der anderen Linie (21) durchzuführen, und um die Versetzung der genannten Gruppe in Richtung zu den Wandlern grösserer Grösse in der entsprechenden Linie und die Versetzung der anderen Gruppe in Richtung zu den Wandlern kleinerer Grösse in der anderen Linie durchzuführen, wodurch die Sonde somit die Prüfung des Gegenstandes gemäss dem Transmissionsverfahren ermöglicht.

5. Ultraschallsonde nach Anspruch 1, dadurch gekennzeichnet, dass die Anzahl der Linien von M Wandlern gleich zwei ist, dass eine (20) der Linie aus Senderwandlern und die andere (21) aus Empfängerwandlern zusammengesetzt ist, wobei diese Linien ferner in bezug aufeinander geneigt sind, sich auf der gleichen Seite des Gegenstands (3) befinden und derart angeordnet sind, dass ihre jeweiligen Wandler geringerer Grösse einander gegenüberliegen und ausgehend von diesen Wandlern der kleineren Grösse divergieren, und dass die Mittel (14) zum Aktivieren und zum Versetzen vorgesehen sind, um die Aktivierung einer Gruppe (22) von m Senderwandlern ausgehend von Wandlern geringerer Grösse in der entsprechenden Linie (20) mit nachfolgender Aktivierung einer anderen Gruppe (23) von m Empfängerwandlern ausgehend von Wandlern geringerer Grösse in der anderen Linie (21) durchzuführen, und um die Versetzung der genannten Gruppe und der anderen Gruppe in Richtung zu den Wandlern grösserer Grösse in ihren entsprechenden Linien durchzuführen, wodurch die Sonde somit die Prüfung des Gegenstandes gemäss dem Reflexionsverfahren ermöglicht.

6. Ultraschallsonde nach einem der Ansprüche 1 bis 5, dadurch gekennzeichnet, dass die Mittel (14) zum Aktivieren und zum Versetzen vorgesehen sind, um gleichzeitig die Wandler einer jeden Gruppe von m Wandlern zu aktivieren.

7. Ultraschallsonde nach einem der Ansprüche 1 bis 5, dadurch gekennzeichnet, dass die Mittel (14) zum Aktivieren und zum Versetzen vorgesehen sind, um die Wandler einer jeden Gruppe von m Wandlern fortschreitend und von einer Stelle zur nächsten, ausgehend von einem von ihnen mit Aktivierungsverzögerungen zu aktivieren, die von der Lage der Gruppe in ihrer Linie unabhängig sind.

8. Ultraschallsonde nach einem der Ansprüche 1 bis 7, dadurch gekennzeichnet, dass die Grössen der M Wandler einer jeden Linie eine arithmetische Reihe bilden.

9. Ultraschallwandler nach einem der Ansprüche 1 bis 8, dadurch gekennzeichnet, dass die ganze Zahl von Wandlern, um die jede Gruppe von m Wandlern versetzt ist, grösser als die Zahl m ist und dass die Mittel (14) zum Aktivieren und Versetzen vorgesehen sind, um die Zahl m bei jeder Aktivierung derart zu verändern, dass das von der Gruppe ausgesandten und/oder von dieser Gruppe empfangenen Ultraschallbündel eine von der Tiefe unabhängige Grösse aufweist.

## Claims

1. Ultrasonic probe intended to transmit ultrasonic beams towards points of variable depth of an object (3) to be inspected, and/or to receive ultrasonic beams from these points in response to other ultrasonic beams sent to them, of the type including:
   – at least one straight line of M juxtaposed transmitter (12, 20) and/or receiver (13, 21) ultrasonic transducers, directed towards the object to be inspected, and
   – means (14) of activation of at least one group (15, 17–18, 22–23) of m juxtaposed transducers, taken from among the M transducers, and shifted, in a given direction of each group of m transducers, by a whole number of transducers, after activation, characterized in that the M transducers have different sizes from each other, the size of a transducer being the dimension of the transmitting and/or receiving zone of the transducer, measured along the length of the straight line to which that transducer belongs, and are ordered, in their line, monotonically according to their sizes, these being determined in such a way as to explore the object with a known redundancy rate and substantially independent of depth.

2. Ultrasonic probe according to claim 1, characterized in that the M transducers (13) are transmitter-receiver transducers, in that the activation of the m transducers consists of a transmission followed by a reception and in that the means (14) of activation and of shifting are provided in order to carry out the said activation starting from the smaller sized transducers in the line (12), and in order to make each shift towards the transducers of larger size in the line, the probe thus enabling the inspection of the object using the echo method.

3. Ultrasonic probe according to claim 1, characterized in that the M transducers (13) are transmitter-receiver transducers and in that the means (14) of activation and of shifting are provided in order to carry out the activation of a group (17) of m transducers starting from the smaller sized transducers in the line (12) by making these m transducers operate as transmitters, followed by the activation of another group (18) of m other transducers starting from the transducers of larger size in the line (12) by making these other m transducers operate as receivers, and in order to carry out the shifting of the said group (17) towards the transducers of larger size in the line and the shifting of the said other group (18) towards the transducers of smaller size in the line, the probe thus enabling the inspection of the object using the tandem method.

4. Ultrasonic probe according to claim 1, characterized in that the number of lines of M transducers is equal to two, one (20) of the lines being composed of transmitter transducers and the other (21) of receiver transducers, these lines also being parallel, facing each other on either side of the object (3) and directed with respect to each other so that the larger sized transducer of one is opposite the smaller sized transducer of the other, and in that the means (14) of activation and of shifting are provided in order to carry out the activation of a group (22) of m transmitter transducers starting from the smaller sized transducers in the corresponding line (20), followed by the activation of another group (23) of m receiver transducers starting from the larger sized transducers in the other line (21), and in order to carry out the shifting of the said group to-wards the transducers of larger size in the corresponding line and the shifting of the other group towards the transducers of smaller size in the other line, the probe thus enabling the inspection of the object using the transmission method.

5. Ultrasonic probe according to claim 1, characterized in that the number of lines of M transducers is equal to two, one (20) of the lines being composed of transmitter transducers and the other (21) of receiver transducers, these lines also being inclined with respect to each other, situated on the same side of the object (3) and arranged in such a way that their respective smaller sized transducers are facing each other and that they diverge starting from these smaller sized transducers and in that the means (14) of activation and of shifting are provided in order to carry out the activation of a group (22) of m transmitter transducers starting from the smaller sized transducers in the corresponding line (20), followed by the activation of another group (23) of m receiver transducers starting from the smaller sized transducers in the other line (21), and in order to carry out the shifting of the said group and the said other group towards the larger sized transducers in their respective lines, the probe thus enabling the inspection of the object using the reflection method.

6. Ultrasonic probe according to any of claims 1 to 5, characterized in that the means (14) of activation and of shifting are provided in order to simultaneously activate the transducers of each group of m transducers.

7. Ultrasonic probe according to any of claims 1 to 5, characterized in that the means (14) of activation and of shifting are provided in order to activate the transducers of each group of m transducers progressively and step by step starting from one of them, with activation delays that are independent of the position of the said group in its line.

8. Ultrasonic probe according to any of claims 1 to 7, characterized in that the sizes of the M transducers in each line form an arithmetic progression.

9. Ultrasonic probe according to any of claims 1 to 8, characterized in that the whole number of transducers by which each group of m transducers is shifted is higher than the number m and in that the means (14) of activation and of shifting are provided in order to make the number m vary at each activation, in such a way that the ultrasonic beam transmitted by the said group and/or received by this group has a size that is independent of the depth.

FIG. 1

FIG. 2

FIG. 4

FIG. 3

FIG. 5

0133 135

FIG. 6